# EUROPÄISCHE PATENTSCHRIFT

(11) **EP 0 467 221 B1**
(45) Veröffentlichungstag und Bekanntmachung des Hinweises auf die Patenterteilung: **04.10.1995**
(21) Anmeldenummer: 91111545.9
(22) Anmeldetag: 11.07.1991
(51) Int. Cl.: B01J 2/18, B22F 9/08

(54) **Verfahren und Vorrichtung zur Herstellung von kugelförmigen Teilchen aus flüssiger Phase**
Process and apparatus for preparing spherical particles from a liquid phase
Procédé et installation pour la préparation de particules sphériques à partir d'une phase liquide

(30) Priorität: 17.07.1990 DE 4022648
(43) Veröffentlichungstag der Anmeldung: 22.01.1992
(73) Patentinhaber: Nukem GmbH, D-63754 Alzenau (DE)
(72) Erfinder: Brandau, Egbert, Dr., W-8755 Alzenau (DE); Huschka, Hans, Dr., W-6450 Hanau 9 (DE); Kadner, Martin, Dr., W-6457 Maintal 1 (DE); Schröder, Waldemar, W-6467 Hasselroth 1 (DE)
(74) Vertreter: Stoffregen, Hans-Herbert, Dr. Dipl.-Phys.

(56) Entgegenhaltungen:
- WO-A-81/01811
- DE-A- 2 725 924
- FR-A- 2 571 980
- US-A- 4 389 356
- PATENT ABSTRACTS OF JAPAN vol. 12, no. 236 (M-715)6. Juli 1988

## Beschreibung

Die Erfindung betrifft ein Verfahren und eine Vorrichtung zur Herstellung von kugelförmigen Teilchen im Korngrößenbereich von 5 µm bis 5 mm mit engem Kornspektrum aus flüssiger Phase durch Erzeugung von Tropfen mittels vibrierender Düsen wobei die der Düse zufließende flüssige Phase auf konstante oder im wesentlichen konstante Temperatur gehalten wird, und durch Verfestigung der gebildeten Tropfen in einen gasförmigen oder flüssigen Kühlmedium.

Für kugelförmige Teilchen im Größenbereich 5 µm bis 5mm, gibt es einen großen Anwendungsbereich, beispielsweise auf dein Gebiet der Pulververarbeitung, da solche Teilchen staubfrei gehandhabt werden können und gut rieselfähig sind. Die Gleichmäßigkeit der Teilchen und ihre enge Kornverteilung ermöglichen eine gute Raumausfüllung, zum Beispiel bei der Beladung von Preßformen oder von chromatografischen Säulen. Sie sind daneben auch als Katalysatorträger geeignet.

Kugelförmige Teilchen aus Metallen oder Legierungen werden u. a. in der Löttechnik verwendet, wobei die Anforderungen an eine möglichst enge Kornverteilung ständig steigen. Das Interesse an Mikrokugeln aus organischen Stoffen anstelle von staubendem Pulver nimmt ebenfalls ständig zu, beispielsweise auf dem Sektor Futtermittel wegen der guten Dosierbarkeit oder in der Pharmaindustrie bei der Herstellung von Pharmaka mit Depotwirkung.

Es gibt auch bei organischen Stoffen Anforderungen, die auf eine vollständige und reproduzierbare Raumausfüllung, gegebenenfalls unter optimaler Raumnutzung durch Verwendung mehrerer Fraktionen unterschiedlicher Größe, aber enger Kornverteilung abzielen, wie zum Beispiel bei der Sprengstoffherstellung.

Für die Herstellung von rieselfähigen Teilchen mit mehr oder minder guter Kugelform gibt es eine Reihe von Verfahren, die meist auf der Verwendung von Zweistoffdüsen (Hohlkegeldüsen) beruhen, aber aufgrund des Sprüheffekts kein einheitliches Kornspektrum, sondern eine breite Korngrößenverteilung ergeben. Nachteilig ist auch der dabei auftretende Staubanteil sowie die Entstehung von Teilchen mit sehr unterschiedlichen Eigenschaften, die sich bei der Erstarrung von großen und kleinen Tropfen in einer gekühlten Fallstrecke ergeben.

Zur Erzeugung von Mikrokugeln mit monodisperser Verteilung sind Verfahren bekannt geworden, die auf die Zerteilung von Flüssigkeitsstrahlen durch Einwirkung von mechanischen Schwingungen auf die Flüssigkeit beruhen, wobei die Anwendung periodischer Schwingungen, z.B. von elektromagnetischen Schwingungssystemen, monodisperse Tropfen ergibt, welche auf unterschiedlichen Wegen verfestigt werden.

Die meisten dieser Verfahren beziehen sich auf den Einsatz von wäßrigen Losungen und anderen Flüssigkeiten bei Raumtemperatur.

Die Verfestigung der Tropfen erfolgt bei diesen Verfahren meist durch chemische Prozesse wie Fällung und/oder Wasserentzug. Zur Herstellung von kugelförmigen Teilchen aus flüssigen Phasen mit hohem Schmelzpunkt sind diese Verfahren aber nicht geeignet.

In der US-PS 2 968 833 wird ein Verfahren vorgeschlagen, nach dem hochkonzentrierte wäßrige Lösungen von Ammoniumnitrat bei einer Temperatur von 140°C mit Hilfe von vibrierenden Düsensystemen in uniforme Tropfen umgewandelt werden, die sich während des Fallens in einer Kühlstrecke zu gleich großen Granulatteilchen verfestigen. Dieses Verfahren kann auch auf andere Salze mit ähnlichen chemischen und physikalischen Eigenschaften, wie Ammoniumnitrat oder Harnstoff angewendet werden. Für Flüssigkeiten mit hohem Schmelzpunkt ist dieses Verfahren allerdings nicht geeignet, da sich keine kugelrunden Teilchen bei höheren Temperaturen bilden bzw. die Teilchen in der Kühlstrecke zusammenkleben.

Auch in der DE-PS 27 25 924 wird ein Verfahren beschrieben, geschmolzene Substanzen unter Vibration durch eine Düse zu vergießen und durch Erstarrung der Tropfen in einer gekühlten Fallstrecke kugelförmige Teilchen zu erzeugen. Ein wesentlicher Nachteil dieses Verfahrens liegt darin, daß die Abkühlung und Erstarrung der Tropfen in einem Temperaturgradienten erfolgt, was insbesondere bei höheren Temperaturen nur schwer zu steuern ist. Auch hier erfolgen Teilchenverklebungen in der Kühlstrecke bei höheren Temperaturen.

Aus der US 4,389,356 ist ein Schwefelprilling bekannt, bei dem eine zu zerstäubende Schwefelschmelze vor der Zerstäubung auf einer Temperatur von in etwa 1°C bis 7°C oberhalb der Schmelztemperatur des Schwefels gehalten wird.

Unmittelbar nach Verlassen eines im Kopf eines Prillturms vorhandenen Zerstäuberkopfs werden die bestäubten Schmelzpartikel abgeschreckt, um im erforderlichen Umfang zu kristallisieren.

Der WO 81/01811 ist ein Verfahren zur Herstellung von Metallkugeln zu entnehmen, bei der ein Faden geschmolzenen Metalls durch einen vibrierenden Ring in einzelne Tropfen aufgeteilt wird, um diese anschließend zu kühlen.

Es war daher Aufgabe der vorliegenden Erfindung, ein Verfahren zur Herstellung von kugelförmigen Teilchen im Korngrößenbereich 5 µm bis 5 mm mit engem Kornspektrum aus flüssiger Phase durch Erzeugung von Tropfen mittels vibrierender Düsen und Verfestigung der gebildeten Tropfen in einem gasförmigen oder flüssigen Kühlmedium zu entwickeln, das auch für Stoffe mit hohem Schmelzpunkt anwendbar sein sollte. Außerdem war eine entsprechende Vorrichtung zu konstruieren.

Diese Aufgabe wird erfindungsgemäß dadurch gelöst, daß die den Düsen zufließende flüssige Phase, die vibrierenden Düsen und die sich durch Vertropfen bildenden Tropfen bis zur Stabilisierung ihrer Kugelform auf konstanter Temperatur gehalten werden, die 1 bis 10°C über der Schmelztemperatur der flüssigen Phase liegt, und daß die Verfestigung der Tropfen nach ihrer Stabilisierung schlagartig durch Abschrecken mit einem gasförmigen oder flüssigen Kühlmedium erfolgt, dessen Arbeitstemperatur mindestens 100°C unter der Schmelztemperatur der flüssigen Phase liegt.

Vorzugsweise erfolgt die Abschreckung der kugelförmigen Tropfen durch das um mindestens 100°C gegenüber der Tropfentemperaturkältere Kühlmedium durch ständige Zufuhr des Kühlmediums im Gleichstrom mit der Tropfenfallrichtung. Besonders bewährt haben sich als Kühlmedium Flüssigkeiten, deren Arbeitstemperaturen nahe am Siedepunkt dieser Kühlflüssigkeiten liegen.

Vorteilhafterweise verwendet man hierfür flüssigen Stickstoff, flüssiges Argon oder flüssige Kohlensäure, doch sind auch Wassernebel mit Arbeitstemperaturen von 80 bis 95°C brauchbar.

Dieses Verfahren eignet sich besonders für Kugeldurchmesser von 20 µm bis 2 mm und schmelzbare organische und anorganische Stoffe mit Schmelzpunkten bis 1500°C. Die flüssigen Phasen können dabei auch suspendierte Feststoffe enthalten.

Der Vorgang der Tropfenbildung aus einem vibrierenden Flüssigkeitsstrahl, einschließlich der Tropfenformung zu einer Kugel, läuft bei dem vorliegenden Verfahren in sehr kurzen Zeiträumen von wenigen Millisekunden bis zu einer Mikrosekunde ab. Das weitere Schicksal der runden Tropfen, wie die sofortige Erstarrung zur Kugel oder die unerwünschte Ausbildung der sogenannten Tropfenform aufgrund der Einwirkung von Reibungskräften sowie das unerwünschte Verschmelzen der fallenden Tropfen zu größeren Teilchen aller nur denkbaren Formen, hängt von der Geschwindigkeit ab, mit der die Tropfen in diesem schmelzflüssigen Zustand verfestigt werden.

Bei dem vorliegenden Verfahren wird der Vorgang der Tropfenbildung und Tropfenformung zu einer Kugel scharf getrennt vom Erstarrungsvorgang, dem Übergang des flüssigen Tropfens in den festen Zustand. Dadurch ergibt sich der große Vorteil, daß die Einhaltung weniger Verfahrensparameter genügt, daß die primär entstehenden uniformen, kugelförmigen Tropfen auch als feste Kugeln mit engem Kornspektrum erhalten werden.

Die genaue Einhaltung der genannten Verfahrensparameter ermöglicht die Übertragung der bei Raumtemperatur bekannten Vorgänge der Kugelerzeugung auf höhere Temperaturen. Dabei hat sich gezeigt, daß die Tropfenbildung aus vibrierenden Flüssigkeitsstrahlen und die Tropfenformung zu Kugel sowie deren Verfestigung mit engem Kornspektrum auch bei Stoffen mit hohen Schmelzpunkten bis zu 1500°C erreicht werden kann, wenn die von den jeweiligen Stoffeigenschaften abhängigen Verfahrensparameter entsprechend eingestellt und konstant gehalten werden.

Die Beobachtung des Tropfenbildungsvorganges mit Hilfe einer Stroboskoplampe hat ergeben, daß auch bei hohen Temperaturen und schweren Flüssigkeiten, wie geschmolzenen Bleilegierungen, der Zerfall des Flüssigkeitsstrahles in uniforme Tropfen unter der Einwirkung von Schwingungen ebenso abläuft, wie bei Raumtemperatur und wäßrigen Lösungen. Nach dem Zerfall des Flüssigkeitsstrahles schwingen Teilchen hoher Dichte allerdings viel stärker nach als solche niedriger Dichte, dennoch durchlaufen auch sie das Stadium der exakten flüssigen Kugel, bevor sie die bekannte Tropfenform annehmen. Diese schmelzflüssigen, kugelförmigen Tropfen können durch gezieltes schnelles Abkühlen oder Abschrecken aus dem flüssigen Zustand ohne Verformung in feste kugelförmige Teilchen überführt werden. Voraussetzung dafür ist, daß die Tropfentemperatur nur um wenige Grade über der Erstarrungstemperatur liegt, so daß zuerst nur die Schmelzwärme oder ein für die Oberflächenhärtung der Teilchen ausreichender Teil davon abgeführt werden muß.

Die restliche Wärme wird dann während des Fallens in einem Kühlturm und in einem gekühlten Sammelgefäß abgeführt, wo ein Verschmelzen der festen Teilchen nicht mehr stattfinden kann.

Das verwendete Kühlmedium kann sowohl ein Gas, Dampf oder Nebel, als auch eine möglichst niedrigviskose Flüssigkeit sein. Es wurde gefunden, daß die günstigste Art der Wärmeabführung durch ein Kühlmedium bei möglichst niedriger Temperatur, mindestens 100°C unter der Verdüsungstemperatur dann gegeben ist, wenn die Strömung des Kühlmediums den Tropfenstrahlen bzw. der Fallrichtung der Tropfen gleichgerichtet ist. Erfindungsgemäß kommen die Tropfen mit dem kalten Kühlmedium erstmals dann in Kontakt, wenn sie die exakte Kugelform ausgebildet haben. Dies kann auch durch seitliches Anblasen der Tropfen mit dem Kühlmedium erfolgen, vorteilhafter ist jedoch die Abkühlung bei gleichgerichteter Strömung.

Wegen der Empfindlichkeit vieler Stoffe gegen Sauerstoff, zum Beispiel Metallschmelzen oder organische Stoffe, wird als Kühlmedium bevorzugt verdampfender flüssiger Stickstoff oder verdampfende flüssige Kohlensäure verwendet.

Bei großen Durchsätzen und insbesondere dort, wo das Produkt es erlaubt, wird als Kühlmedium vorteilhafterweise ein Nebel aus feinsten Tropfen einer Flüssigkeit nahe am Siedepunkt verwendet. Dadurch kann die Erstarrungswärme der Tropfen durch den plötzlichen Wärmeverbrauch beim Verdampfen des flüssigen Kühlmediums rasch abgeführt werden.

Besonders wirtschaftlich gestaltet sich ein solches Verfahren bei Verwendung von feinsten Wassernebeln bei 80 bis 95°C.

Der Antrieb der vibrierenden Düsen erfolgt vorzugsweise durch elektromagnetische Schwingungssysteme, für sehr hohe Frequenzen durch piezoelektrische oder magnetostriktive Schwingungssysteme. Bei hohen Durchsätzen kann man Düsenplatten mit bis zu 100 Düsen einsetzen.

Zur Durchführung dieses Verfahrens verwendet man vorteilhafterweise eine Vorrichtung, die aus einem Vorratsbehälter für die flüssige Phase, einem mit einem Vibrationserreger verbundenen Düsenkopf mit einer oder mehreren Düsen, einer Zuführungsleitung zwischen Vorratsbehälter und Düsenkopf, einer Tropfenfallstrecke, einer Kühlmittelzuführung und einem Auffanggefäß für die kugelförmigen Teilchen besteht. Gekennzeichnet ist die Vorrichtung dadurch, daß die Zuführungsleitung für die flüssige Phase, oder ein Teil davon, der Düsenkopf und ein variabler Teil der Tropfenfallstrecke oberhalb der Kühlmittelzuführung von einem Behälter mit thermisch isolierenden Wänden umschlossen ist, der auf der Unterseite im Bereich der Tropfenfallstrecke eine Öffnung aufweist.

Vorzugsweise ist der Behälter mit Gasleitungen versehen, um ihn mit Inertgas zu spülen, wobei die Temperatur im Innenraum im Bereich von 0,3 bis 0,5 % konstant gehalten werden muß.

Weiterhin ist es vorteilhaft, wenn die Zuführungsleitung für die flüssige Phase einen spiralförmigen Abschnitt aufweist. Dadurch ist es möglich, den Düsenkopf zur Einstellung der benötigten Tropfenfallstrecke nach oben oder unten um geringe Beträge zu verschieben. Bei größeren Verschiebungen muß die Verbindung zwischen Düsenkopf und Schwingungserreger verkürzt oder verlängert werden.

Außerdem ist es wichtig, durch Ausgleichsmassen am Düsenkopf die schwingende Gesamtmasse konstant zu halten.

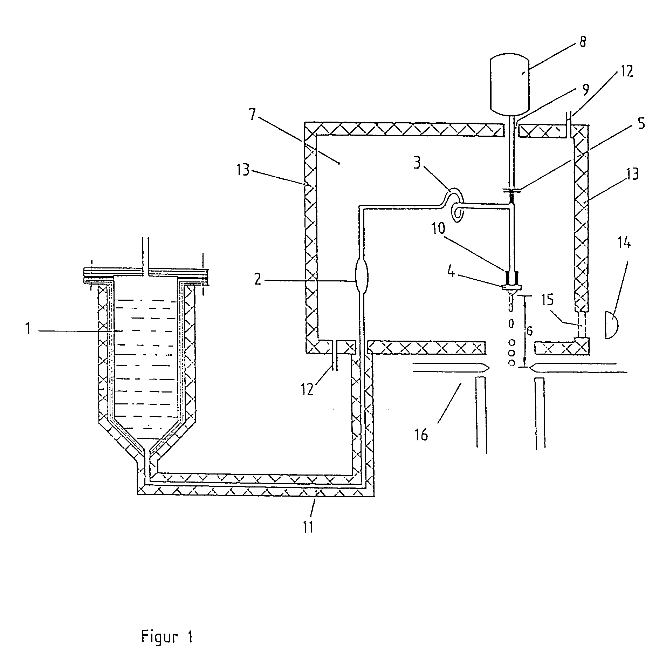

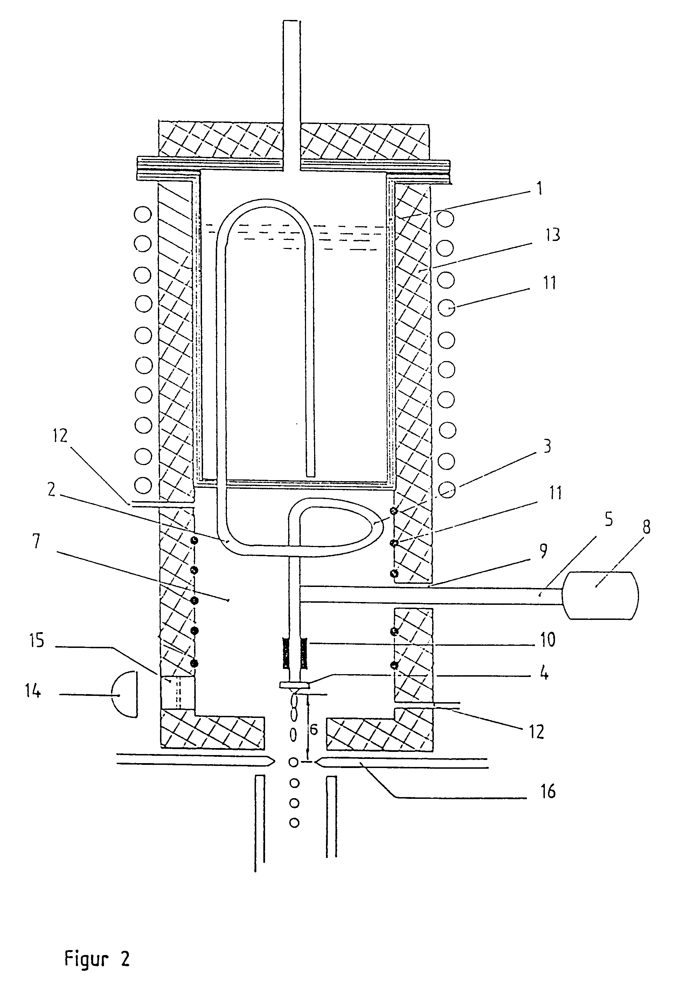

Beispielhafte Ausführungsformen der erfindungsgemäßen Vorrichtung sind schematisch in Figur 1 und 2 dargestellt. Die Vorrichtung ist dadurch gekennzeichnet, daß der vibrierende Düsenkopf (4), die Zuführungsleitung (2) für die flüssige Phase aus dem Vorratsbehälter (1) zum Düsenkopf (4) und ein Teilstück der Tropfenfallstrecke (6) bis zur Ausbildung der exakten Kugelform in einem abgeschlossenen, isothermen Behälter (7) angeordnet sind, dessen Temperatur im Bereich 50 bis 1.500°C vorzugsweise auf 0,3 bis 0,5 % konstant gehalten werden kann. Der isotherme Raum kann mit einem inerten Gas gespült werden, das über Rohrleitungen (12) zu- und abgeführt wird. Der Vibrationsgenerator (8) ist außerhalb des isothermen Behälters (7) angeordnet und unter Verwendung einer wärmeisolierenden Durchführung (9) mit dem Düsenkopf (4) mechanisch so gekoppelt, daß die Schwingungsübertragung im Temperaturbereich bis zu 1.500°C gewährleistet ist.

Die Flüssigkeitsdosierung aus dem Vorratsbehälter (1) zum Düsenkopf (4) erfolgt durch eine Zuführungsleitung (2), die einen spiralförmigen Abschnitt (3) aufweist. Die schwingende Gesamtmasse im isothermen Behälter (7) wird durch zusätzliche Ausgleichsmassen (10) im Bereich 0,1 bis 1 kg konstant gehalten.

Der Behälter (7) besitzt Wände (13) aus einem thermisch isolierenden Material und besitzt lediglich im Bereich der Tropfenfallstrecke (6) eine größere Öffnung. Mit diesen Vorrichtungen werden die geforderten Bedingungen nach Temperaturkonstanz der dem Düsenkopf (4) zudosierten flüssigen Phase, dervibrierenden Flüssigkeitsstrahlen und der sich daraus bildenden Tropfen bis zur Stabilisierung der Kugelform in besonderem Maße realisiert. Außerdem wird damit die erforderliche schnelle Abkühlung der Tropfen durch Abschrecken erreicht, was eine Voraussetzung für die Erzeugung diskreter runder Kugeln ohne Ausschuß, z.B. in Form von Zwillingen und anderen Sonderformen ist. Die Ausführung entsprechend Figur 1 ist geeignet für Stoffe mit Schmelzpunkten bis etwa 800°C. Bei Anwendung von höheren Temperaturen bis zu 1.500°C ist die Ausführung gemäß Figur 2 vorzuziehen. Bei beiden Ausführungen befindet sich die geschmolzene, in Tropfen umzuwandelnde flüssige Phase in einem Vorratsbehälter (1), der mit einer Heizung und einer Isolation ausgestattet ist.

Mit Hilfe von z.B. eines Gasdrucks wird die flüssige Phase durch die Zuführungsleitung (2) im isothermen Behälter (7) gefördert und der Düse am Düsenkopf (4) zugeführt.

Durch den Vibrationsgenerator (8), der sich außerhalb des isothermen Behälters (7) befindet, wird der Düsenkopf (4) mit Hilfe einer starren Verbindung (5) in periodische Schwingungen versetzt, wodurch der aus der Düse fließende Flüssigkeitsstrahl in uniforme Tropfen zerfällt. Die starre Verbindung (5) steckt in einer wärmeisolierenden Durchführung (9) und überträgt die Schwingungen des Vibrationsgenerators (8) auf die heiße Düse. In Figur 1 ist dies in vertikaler Ausführung, in Figur 2 in horizontaler Ausführung dargestellt.

Im Vorratsbehälter (1) wird der zu vertropfende Stoff geschmolzen oder liegt schon als Schmelze vor. In diesem Behälter darf die Temperatur der Flüssigkeit etwas mehr als 10°C über der Schmelztemperatur liegen, auch die Temperaturschwankung darf etwas größer als 0,5 % sein.

Die Zuführungsleitung (2), die vom Vorratsbehälter (1) zur Düse führt, ist in der Ausführung gemäß Figur 1 zunächst außerhalb des isothermen Behälters (7) angeordnet und muß deshalb beheizt und wärmeisoliert sein. Die Heizung (11) kann aus elektrischen Widerstandsdrähten bestehen.

Sobald aber die flüssige Phase in die Zuführungsleitung (2) innerhalb des isothermen Behälters (7) eintritt, nimmt sie die dort eingestellte Temperatur von 1 bis 10°C über ihrem Schmelzpunkt an. Die dafür erforderliche Verweilzeit kann vorzugsweise in einem aufsteigenden Ast und einer Erweiterung der Zuführungsleitung (2) im isothermen Behälter (7) dem Durchsatz angepaßt werden.

Insbesondere bei hohen Temperaturen müssen die verwendeten Werkstoffe den jeweiligen Anforderungen angepaßt werden, die von den zu verarbeitenden Stoffen bestimmt sind. Dies kann dazu führen, daß sich das Gewicht der schwingenden Masse von Fall zu Fall ändert. Auch die Verwendung unterschiedlich großer Düsenköpfe (4) mit mehr oder weniger Düsen verändert das Gewicht. Um zu vermeiden, daß das ganze Schwingungssystem stets entsprechend angepaßt werden muß, werden vorzugsweise Ausgleichsmassen vor oder am Düsenkopf (4) angebracht, die dafür sorgen, daß die gesamte, in Schwingung versetzte Gesamtmasse in allen Fällen nahezu konstant ist.

Der Vorgang der Tropfenbildung aus einem Flüssigkeitsstrahl, der aus einer Düse fließt, ist abhängig u.a. von der Oberflächenspannung, Dichte und Viskosität der flüssigen Phase. Daher muß die Tropfenfallstrecke (6) von der Düse bis zur Ausbildung der Kugelform für jede Flüssigkeit empirisch ermittelt werden. Dazu dient beispielsweise eine Stroboskoplampe (14), deren Lichtblitze den Vorgang durch das Sichtfenster (15) beobachtbar machen. Eine geringe Phasenverschiebung der Frequenz der Stroboskoplampe gegenüber der des Vibrationsgenerators ermöglicht sogar die Beobachtung der Schwingungsvorgänge der Tropfen nach unterschiedlichen Fallstrecken, so daß man den Punkt, an dem die Tropfen Kugelgestalt angenommen haben, genau lokalisieren kann. Durch Verschiebung des Düsenkopfes (4) kann man die Tropfenfallstrecke (6) so verändern, daß die Tropfen genau an der Stelle abkühlen, wo sie Kugelgestalt angenommen haben.

Falls man die Tropfen nicht sichtbar machen kann, muß man die Bedingungen für die Erzeugung der optimalen Kugelform in einer Versuchsreihe an Hand von erstarrten Kugeln ermitteln.

Das Abschrecken der fallenden Tropfen mit dem Kühlmedium erfolgt durch Anblasen der Tropfen aus der Kühlmittelzuführung (16), die gleichmäßig um den Düsenkopf (4) verteilt angeordnet ist. Der Abstand der Kühlmittelzuführung (16) zu den Tropfen beträgt wenige Zentimeter. Damit wird sichergestellt, daß das geforderte Temperaturgefälle von mindestens 100°C kontrolliert aufrechterhalten wird.

Anstelle einer Einzeldüse kann am Düsenkopf (4) eine Düsenplatte mit mehreren Düsen gleicher Größe und gleicher Bohrung verwendet werden. Die dadurch vergrößerte Masse wird durch entsprechende Verringerung der Ausgleichsmasse kompensiert.

Die optimale Anzahl Düsen an einer Düsenplatte wird bestimmt vom gewünschten Durchsatz, von den geometrischen möglichen Verhältnissen und von der erforderlichen Abkühlung. Die Anpassung an das Schwingungssystem ist unproblematisch.

An Hand der folgenden Beispiele wird die vorliegende Erfindung näher erläutert.

### Beispiel 1

In einer Vorrichtung gemäß Figur 1 wurde hochreines Silbernitrat vom Schmelzpunkt 209°C im Vorratsbehälter (1) geschmolzen und auf 225°C temperiert. Die von dort zum isothermen Behälter (7) eines Wärmeschrankes führende Zuführungsleitung (2) war auf 220°C temperiert. Der isotherme Behälter (7), in dem sich die Zuführungsleitung (2), der Düsenkopf (4) mit der Düse und die Tropfenfallstrecke (6) für die Ausbildung der Kugelform befand, wurde auf eine Arbeitstemperatur von 215°C eingestellt. Die Genauigkeit der Temperaturregelung war besser als + 1°C, entsprechend kleiner als 0,5%.

Der Durchmesser der Düsenöffnung am Düsenkopf (4) betrug 350 µm. Die Schwingung, die vom Vibrationsgenerator (8) auf den Düsenkopf (4) übertragen wurde, hatte eine Frequenz von 800 Hz. Bei einem Gasdruck von 0,14 bar, der mit Hilfe von Druckluft eingeregelt wurde, betrug die Durchflußmenge an Silbernitratschmelze 28,5 g/min., entsprechend 7,2 ml/min unter Berücksichtigung der Dichte von 3,96 g/cm³ am Schmelzpunkt. Dies entspricht einem Durchsatz von 1,71 kg Silbernitrat pro Stunde und Düse, entsprechend der Bildung von 48.000 Tropfen je Minute und Düse. Die Tropfenfallstrecke (6) wurde auf 5 cm eingestellt, nachdem mit Hilfe des Stroboskops (14) diese Fallstrecke als optimal beurteilt worden war.

An dieser Stelle wurden die Tropfen mit Preßluft aus zwei Düsen der Kühlmittelzuführung (16) vom Durchmesser 10 mm beidseitig angeblasen. Die Luftdosierung für beide Düsen betrug 500 l/h, der Abstand der Düsen von den Tropfen war auf 2 cm eingestellt. Die Preßluft hatte Raumtemperatur, so daß die heißen Silbernitrat-Tropfen bei der Temperaturdifferenz von 200°C sehr rasch erstarrten. Ein geringer Sog in Fallrichtung der Tropfen ergab einen Gleichstrom von Tropfen und Kühlgas und verhinderte das Eindringen von kalter Luft in den isothermen Behälter (7).

Insgesamt wurden 940 g Mikrokugeln aus Silbemitrat erzeugt. Die Ausbeute der Siebfraktion 630-800 µm lag bei 98,5 %. An einer repräsentativen Probe wurde die Durchmesserverteilung gemessen, wobei sich ein mittlerer Durchmesser von 653 µm mit einer prozentualen Standardabweichung von 3,6 % ergab. Die Kügelchen waren glasig farblos bis weiß und zeichneten sich durch sehr gute Rundheit aus.

Der gleiche Versuch wurde unter Verwendung eines 10-fach-Düsenkopfes (4) mit zehn gleichen Düsen vom Durchmesser 350 µm durchgeführt. Die Temperatur im Vorratsbehälter (1) betrug 223°C und im isothermen Behälter (7) 216°C mit einer Schwankungsbreite von weniger als 0,5 %. Bei einem Luftdruck über die Schmelze von 0,20 bar und der gleichen Frequenz von 800 Hz betrug der Durchfluß 334 g/min, entsprechend 84,4 ml/min. Dies entspricht einem Durchsatz von 20 kg Silbemitrat je Stunde.

In diesem Falle wurden die Tropfen jeder Düse nach der Fallstrecke (6) von 5 cm Länge nur von einer Seite aus 10 mm-Düsen im Abstand von 2 cm angeblasen. Der Preßluftverbrauch bei Raumtemperatur für alle 10 Düsen betrug 2.500 l/h. Bei diesem Versuch wurden 17,3 kg Mikrokugeln aus Silbemitrat erzeugt, die nach dem Sieben der Fraktion 630-800 µm eine Ausbeute von 97 % ergaben. Eine repräsentative Probe wurde vermessen mit dem Ergebnis, daß der mittlere Durchmesser bei 691 µm lag und die prozentuale Standardabweichung 5,2 % betrug.

### Beispiel 2

Eine Weichlotlegierung, bestehend aus 63 Gewichtsprozent Zinn und 37 Gewichtsprozent Blei, mit einem Schmelzpunkt von 183°C wurde im Vorratsbehälter (1), wie in Figur 1 dargestellt, geschmolzen und auf 190°C temperiert, wobei Temperaturschwankungen von ± 3°C auftraten. Mit einem Gasdruck von 0,79 bar wurde die Schmelze durch die Zuführungsleitung (2) der Düse im isothermen Behälter (7) zugeführt. Die Temperatur des isothermen Behälters (7) wurde auf 187°C eingeregelt, die Schwankungsbreite war kleiner als 1°C. Die Düsenöffnung hatte einen Durchmesser von 120 µm. Die Düse wurde vom Vibrationsgenerator (8) zu periodischen Schwingungen der Frequenz 1.900 Hertz angeregt. Der isotherme Behälter (7) wurde mit Stickstoffgas der Qualität "reinst" luftfrei gespült.

Auch das Gas über der Schmelze im Vorratsbehälter (1) sowie das Kühlmedium bestand aus Reinstickstoff.

Damit wurde die Oxydation der sehr sauerstoffempfindlichen Zinn-Blei-Legierung vermieden.

Der Durchsatz an flüssiger Legierung betrug 7,2 g/min, daraus bildeten sich 114.000 Tropfen/min. Diese Tropfen wurden mit Reinstickstoffgas von 20°C aus den Düsen der Kühlmittelzuführung (16) beidseitig angeblasen. Das Gas wurde durch leichten Sog nach unten im Gleichstrom mit den Mikrokugeln abgeführt. Die Mikrokugeln wurden nach einer Fallstrecke von 3,5 m, die zusätzlich noch auf -10°C gekühlt wurde, in einem Behälter gesammelt und dann gesiebt.

Die Ausbeute der Siebfraktion 180-250 µm betrug 91,5 %. Eine repräsentative Probe von 1.003 Mikrokugeln aus dieser Siebcharge wurde vermessen. Dabei ergab sich ein mittlerer Durchmesser von 232 µm und eine prozentuale Standardabweichung von 2,5 %. Das mittlere Gewicht der Mikrokugeln betrug 63,4 µg, entsprechend einer Dichte von 9,60 g/cm³.

Die Kugeln zeigten eine gute Rundheit: mehr als 96 % aller Teilchen hatten ein Durchmesserverhältnis von großer Achse zu kleiner Achse besser als 1,03. Die Sauerstoffanalyse der Mikrokugeln ergab Werte von weniger als 100 ppm.

Dieselbe Legierung wurde unter ähnlichen Bedingungen einer vibrierenden Düse von 50 µm Durchmesser zudosiert. Bei einer Frequenz von 9.450 Hertz, entsprechend 567.000 Tropfen pro Minute, betrug der Durchsatz 133 g/h. Diese Einzeldüse wurde anschließend durch eine Düsenplatte (4) mit sechs gleichen Düsen ebenfalls vom Durchmesser 50 µm ersetzt.

Die Frequenz der Schwingungsanregung durch den Vibrationsgenerator (8) betrug 9.550 Hertz, wobei sich 573.000 Tropfen je Minute bildeten. Der Durchsatz betrug je Düse 2,10 g/min. Dies entspricht einer Menge von 756 g/h für die 6-fache-Düsenplatte.

Die Mikrokugeln wurden gesiebt, wobei Ausbeuten von 93,8 bzw. 88,3 % der Siebfraktion 50-125 µm erzielt wurden. Repräsentative Proben dieser Mikrokugeln wurden gemessen und ergaben mittlere Durchmesser von 92 µm bzw. 90 µm sowie prozentuale Standardabweichungen von 7,6 % bzw. 9,8 %.

### Beispiel 3

Für die Herstellung von Mikrokugeln aus Silberlot wurde eine Vorrichtung gemäß Figur 2 benutzt. Das verwendete Silberlot hatte einen Reinheitsgrad von 99,9 %, war oxidfrei und hatte einen Schmelzpunkt von 960°C.

Als Vorratsbehälter (1) für die Silberschmelze wurde ein Tiegel aus rostfreiem Stahl benutzt, der von einer Isolation umgeben war und mit Hilfe einer Induktionsspule aufgeheizt wurde.

Unterhalb des Stahltiegels befand sich ein widerstandsbeheizter Ofenraum mit Heizung (11) und Isolation. Die Dosierung der Silberschmelze zur Düse erfolgte in einer Zuführungsleitung (2) ebenfalls aus rostfreiem Stahl, die durch den Boden des Tiegels in den isothermen Behälter (7) führte und dort zu einer Spirale geformt war, wodurch eine gewisse Elastizität erreicht wurde. Unterhalb der Spirale war die starre Verbindung (5) zwischen Vibrationsgenerator (8) und Düsenkopf (4) befestigt. Die Düse bestand ebenfalls aus rostfreiem Stahl und war mit der Zuführungsleitung (2) fest verbunden.

Im Vortatsbehälter (1) wurde die Silberschmelze auf 974°C aufgeheizt, wobei eine Temperaturschwankung von ± 6°C auftrat. Mit Hilfe von Argongasdruck wurde die Schmelze durch die Zuführungsleitung (2) im isothermen Behälter (7) bis zum Düsenkopf (4) dosiert. Die Temperatur im isothermen Behälter (7) wurde auf 966°C eingeregelt mit einer Schwankungsbreite von ± 3°C, entsprechend ± 0,3%. Vor Arbeitsbeginn wurde der isotherme Behälter (7) mit Reinstargon luftfrei gespült.

Vom Vibrationsgenerator (8) wurde über die starre Verbindung (5) eine periodische Schwingung der Frequenz 200 Hz auf den Düsenkopf (4) übertragen. Dabei zerfiel der aus der Düse ausfließende Flüssigkeitsstrahl in 12.000 Tropfen pro Minute. Nach einer Fallstrecke (6) von 35 mm Länge wurden die Silbertropfen seitlich aus den Düsen (16) mit Argongas von Raumtemperatur angeblasen und so bei der Temperaturdifferenz von mehreren hundert Grad schlagartig verfestigt. In der sich anschließenden gekühlten Fallstrecke wurden die Mikrokugeln vollends abgekühlt und nach dem Auffangen in einer gekühlten Schikane aus Stahlblech in einem Stahlbehälter gesammelt.

### Beispiel 4

Ähnlich wie in Beispiel 3 wurde eine Vorrichtung gemäß Figur 2 zur Herstellung von kugelförmigen Glasperlen benutzt. Der Vorratsbehälter (1), die Zuführungsleitung (2) und der Düsenkopf (4) mit den Gießdüsen waren aus Platin gefertigt.

Die Glasperlen wurden aus einem Kalknatronglas der Zusammensetzung 65 Gew. % SiO₂, 15 Gew. % Na₂O und 20 Gew. % CaO + MgO hergestellt.

Im Vorratsbehälter (1) betrug die Temperatur der Glasschmelze 1.450°C, im isothermen Behälter (7) wurden 1.420°C, mit einer Genauigkeit von ± 5°C eingestellt.

Das flüssige Glas wurde mit einem Luftdruck von 1,30 bar durch die Zuführungsleitung (2) zur Einfachdüse vom Durchmesser 520 µm dosiert. Unter der Einwirkung der Schwingungen des Vibrationsgenerators (8) von 500 Hz bildeten sich in der Fallstrecke (6) uniforme Glastropfen, die 60 mm unterhalb der Düse im Preßluftstrom abgeschreckt wurden. Die heißen Glasperlen fielen in ein Kühlrohr und wurden am Boden in einer Wanne mit Wasser gesammelt.

Von einer repräsentativen Probe wurde der mittlere Durchmesser der Glasperlen zu 995 µm mit einer prozentualen Standardabweichung von 5,2 % bestimmt. Der Durchsatz betrug 2,25 kg Glas je Stunde in Form von 1,8 Millionen Glasperlen.

## Patentansprüche

1. Verfahren zur Herstellung von kugelförmigen Teilchen im Korngrößenbereich 5 µm bis 5 mm mit engem Kornspektrum aus flüssiger Phase durch Erzeugung von Tropfen mittels zumindest einer vibrierenden Düse, wobei die der Düse zufließende flüssige Phase auf konstanter Temperatur gehalten wird, und durch Verfestigung der gebildeten Tropfen in einem gasförmigen oder flüssigen Kühlmedium,
**dadurch gekennzeichnet**,
daß die der Düse zufließende flüssige Phase, die vibrierende Düse und die sich durch Vertropfen bildenden Tropfen bis zur Stabilisierung ihrer Kugelform auf konstanter Temperatur gehalten werden, die 1°C bis 10°C über der Schmelztemperatur der flüssigen Phase liegt, und daß die Verfestigung der Tropfen nach ihrer Stabilisierung schlagartig durch Abschrecken mit einem gasförmigen oder flüssigen Kühlmedium erfolgt, dessen Arbeitstemperatur mindestens 100°C unter der Schmelztemperatur der flüssigen Phase liegt.

2. Verfahren nach Anspruch 1,
**dadurch gekennzeichnet**,
daß die Abschreckung der Tropfen durch das um mindestens 100°C gegenüber der Tropfentemperatur kältere Kühlmedium durch ständige Zufuhr des Kühlmediums im Gleichstrom mit der Tropfenfallrichtung erfolgt.

3. Verfahren nach Anspruch 1 und 2,
**dadurch gekennzeichnet**,
das als Kühlmedium eine Flüssigkeit verwendet wird, deren Arbeitstemperatur nahe am Siedepunkt des Kühlmediums, vorzugsweise 5° - 20° C unterhalb des Siedepunkts liegt.

4. Verfahren nach Anspruch 1 bis 3,
**dadurch gekennzeichnet**,
daß als Kühlmedium flüssiger Stickstoff, flüssiges Argon oder flüssige Kohlensäure verwendet wird.

5. Vorrichtung zur Durchführung des Verfahrens zur Herstellung von kugelförmigen Teilchen nach zumindest einem der Ansprüche 1 bis 4, bestehend aus einem Vorratsbehälter für die flüssige Phase, einem mit einem Vibrationserreger verbundenen Düsenkopf mit einer oder mehreren Düsen, einer Zuführungsleitung zwischen Vorratsbehälter und Düsenkopf, einer Tropfenfallstrecke, einer Kühlmittelzuführung und einem Auffanggefäß für die kugelförmigen Teilchen,
**dadurch gekennzeichnet**,
daß die Zuführungsleitung (2) für die flüssige Phase, oder ein Teil davon, der Düsenkopf (4) und ein variabler Teil der Tropfenfallstrecke (6) oberhalb der Kühlmittelzuführung (16) von einem Behälter (7) mit thermisch isolierenden Wänden (13) umschlossen ist, der auf der Unterseite eine die Tropfenfallstrecke umgebende Öffnung aufweist.

6. Vorrichtung nach Anspruch 5,
**dadurch gekennzeichnet**,
daß der Behälter (7) zu dessen Spülung mit Gasleitungen (12) versehen ist.

7. Vorrichtung nach Anspruch 5 und 6,
**dadurch gekennzeichnet**,
daß die Zuführungsleitung (2) für die flüssige Phase einen spiralförmigen Abschnitt (3) aufweist.

8. Vorrichtung nach Anspruch 5 bis 7,
**dadurch gekennzeichnet**,
daß am Düsenkopf (4) Ausgleichsmassen (10) vorgesehen sind.

## Claims

1. Method for manufacturing spherical particles out of liquid phase having a grain size range from 5 µm to 5 mm with a narrow grain spectrum by generating droplets by means of at least one vibrating nozzle, whereas the liquid phase flowing to the nozzle is maintained at a constant temperature, and solidification of said formed droplets in a gaseous or liquid cooling medium,
**characterized in**
that said liquid phase flowing to the nozzle, said vibrating nozzle and said droplets formed by dropping are maintained at a constant temperature until their spherical shape has stabilized, said temperature being 1 to 10°C above the melting temperature of the liquid phase, and that the solidification of the droplets after their stabilization is achieved abruptly by chilling with a gaseous or liquid cooling medium, working temperature of which is at least 100°C below the melting temperature of said liquid phase.

2. A method according to Claim 1,
**characterized in**
that the chilling of said droplets is achieved by the cooling medium which is at least 100°C colder than the droplet temperature and by continuous feed of said cooling medium in the same direction as the drop direction of said droplets.

3. Method according to Claim 1 and 2,
**characterized in**
that a liquid is used as cooling medium working temperature of which is close to the boiling point of said cooling medium, preferably 5° to 20° C below the boiling point.

4. Method according to Claim 1 to 3,
**characterized in**
that a liquid nitrogen, liquid argon or liquid carbon dioxide is used as cooling medium.

5. A device for implementation of the method for manufacturing spherical particles according to at least one of Claims 1 to 4, comprising a supply container for the liquid phase, a nozzle head connected to a vibrating generator having one or more nozzles, a feed line between said supply container and said nozzle head, a drop distance, a coolant supply unit and a collecting vessel for said spherical particles,
**characterized in**
that the feed line (2) for the liquid phase or a part thereof, the nozzle head (4) and a variable part of the drop distance (6) above the coolant supply unit (16) is enclosed by a container (7) having thermally insulating walls (13), and said container has an aperture on its bottom surrounding said drop distance.

6. Device according to Claim 5,
**characterized in**
that said container (8) is provided with gas lines (12) to flush it.

7. Device according to Claim 5 and 6,
**characterized in**
that the feed line (2) for the liquid phase has a helical section (3).

8. Device according to Claim 5 to 7,
**characterized in**
that compensating weights (10) are provided on said nozzle head (4).

## Revendications

1. Procédé de fabrication de particules sphériques d'une plage granulométrique de 5 µm à 5 mm, à spectre étroit des tailles de grains, à partir d'une phase liquide, par création de gouttes au moyen d'au moins un gicleur vibrant, tandis que la phase liquide s'écoulant vers le gicleur est maintenue à température constante, et par solidification des gouttes formées dans un fluide de refroidissement gazeux ou liquide, caractérisé en ce que la phase liquide s'écoulant vers le gicleur, le gicleur vibrant et les gouttes qui se forment par gouttage sont maintenus à température constante jusqu'à stabilisation de la forme sphérique des gouttes, température qui est située de 1°C à 10°C au-dessus de la température de fusion de la phase liquide, et en ce que la solidification des gouttes après leur stabilisation s'effectue brusquement, par trempe avec un fluide de refroidissement gazeux ou liquide dont la température de travail est située à au moins 100°C en dessous de la température de fusion de la phase liquide.

2. Procédé selon la revendication 1, caractérisé en ce que la trempe des gouttes par le fluide de refroidissement plus froid d'au moins 100°C que la température des gouttes s'effectue par apport permanent du fluide de refroidissement, en courant parallèle à la direction de chute des gouttes.

3. Procédé selon les revendications 1 et 2, caractérisé en ce que l'on utilise comme fluide de refroidissement un liquide dont la température de travail est située à proximité du point d'ébullition du fluide de refroidissement, de préférence à 5°-20°C en dessous du point d'ébullition.

4. Procédé selon la revendication 1 à 3, caractérisé en ce que l'on utilise comme fluide de refroidissement de l'azote liquide, de l'argon liquide ou de l'acide carbonique liquide.

5. Dispositif pour la réalisation du procédé de fabrication de particules sphériques selon au moins l'une quelconque des revendications 1 à 4, constitué d'un réservoir de réserve de phase liquide, d'une tête à gicleurs reliée à un dispositif de création de vibrations et présentant un ou plusieurs gicleurs, d'une conduite d'amenée située entre le réservoir de réserve et la tête à gicleurs, d'un parcours de chute des gouttes, d'une amenée de fluide de refroidissement et d'un récipient de reprise des particules sphériques, caractérisé en ce que la conduite d'amenée (2) de phase liquide, ou une partie de celle-ci, la tête à gicleurs (4) et une partie variable du parcours de chute des gouttes (6) sont entourées au-dessus de l'amenée (16) de fluide de refroidissement par un récipient (7) à parois thermiquement isolantes (13), qui présente sur la face inférieure une ouverture entourant le parcours de chute des gouttes.

6. Dispositif selon la revendication 5, caractérisé en ce que le récipient (7) est muni de conduites de gaz (12) pour son rinçage.

7. Dispositif selon les revendications 5 et 6, caractérisé en ce que la conduite d'amenée (2) de la phase liquide présente un tronçon en forme de spirale (3).

8. Dispositif selon l'une quelconque des revendications 5 à 7, caractérisé en ce que des masses de compensation (10) sont prévues sur la tête à gicleurs (4).
